# EUROPÄISCHE PATENTSCHRIFT

(11) **EP 0 742 150 B1**
(45) Veröffentlichungstag und Bekanntmachung des Hinweises auf die Patenterteilung: **05.01.2000**
(21) Anmeldenummer: 96107198.2
(22) Anmeldetag: 07.05.1996
(51) Int. Cl.: B65B 35/44, B65G 47/51

(54) **Vorrichtung zum Aufnehmen von fortlaufend einzeln zugeführten Gegenständen und zum gruppenweisen Bereitstellen der Gegenstände**
Device for receiving articles one after another and supplying them in groups
Dispositif pour recevoir des articles l'un après l'autre et pour les disposer en groupes

(30) Priorität: 08.05.1995 DE 19516807
(43) Veröffentlichungstag der Anmeldung: 13.11.1996
(73) Patentinhaber: Mache, Siegfried, 74564 Crailsheim (DE)
(72) Erfinder: Mache, Siegfried, 74564 Crailsheim (DE)
(74) Vertreter: WILHELMS, KILIAN & PARTNER Patentanwälte

(56) Entgegenhaltungen:
- EP-A- 0 501 382
- DE-A- 3 724 839
- DE-A- 3 835 058
- FR-A- 1 398 995
- PATENT ABSTRACTS OF JAPAN vol. 14, no. 357 (M-1005), 2.August 1990 & JP-A-02 127224 (NOBUYOSHI FUKUDA), 15.Mai 1990,

## Beschreibung

Die Erfindung betrifft eine Vorrichtung zum Aufnehmen von fortlaufend einzeln zugeführten Gegenständen und zum gruppenweisen Bereitstellen der Gegenstände zur Entnahme z. B. für eine Verpackungsanlage oder dgl., mit einer endlosen quer zur Förderbahn der zugeführten Gegenstände angeordneten Förderkette, die mit Abteilen zur Aufnahme der Gegenstände versehen ist.

Eine derartige Vorrichtung ist beispielsweise aus der DE 37 24 839 C2, der DE-PS 23 36 000 sowie der DE-OS 27 01 464 bekannt.

Derartige Vorrichtungen, die auch als Stauketten bezeichnet werden, werden in einer Verpackungsanlage zwischen der Förderbahn der zugeführten und zu verpackenden Gegenstände und der eigentlichen Verpackungsmaschine angeordnet und dienen dazu, die einzeln fortlaufend zugeführten Gegenstände aufzunehmen und so zwischenzuspeichern, daß sie gruppenweise entnommen und auf die eigentliche Verpackungsmaschine übertragen und dort gruppenweise verpackt werden können. Zu diesem Zweck muß eine derartige Staukette so ausgebildet sein, daß sie auf der Aufnahmeseite den ankommenden Gegenständen fortlaufend ein entsprechendes Abteil zur Aufnahme zur Verfügung stellt, während andererseits auf der Entnahmeseite die zu entnehmende Gruppe von Gegenständen für eine zur Entnahme ausreichende Zeitspanne wenigstens scheinbar ortsfest stehen muß.

Bei den bekannten Vorrichtungen wird das im Prinzip dadurch erreicht, daß eine in einer horizontalen Ebene liegende Förderkette auf einem Schlitten angeordnet ist, der parallel zur Förderrichtung der Förderkette verschiebbar ist und zusammen mit der Förderkette getaktet wird. Auf diese Weise wird erreicht, daß das Förderkettentrum auf der Aufnahmeseite fortlaufend Abteile an der Aufnahmeposition für die aufzunehmenden Gegenstände vorbeiführt, während das gegenüberliegende Förderkettentrum, an dem die Gegenstände gruppenweise entnommen werden, stillsteht.

Die bekannten auf dem oben angegebenen Prinzip basierenden Vorrichtungen haben jedoch den Nachteil, daß mit steigender Taktgeschwindigkeit, die beim Verpacken beispielsweise von Schokoladenriegeln 1000 Takte pro Minute betragen soll, die Stillstandzeit für die gruppenweise Entnahme der Gegenstände außerordentlich kurz wird. Darüberhinaus muß bei den bekannten Vorrichtungen die Förderkette spätestens am Ende der Bewegungsbahn des Schlittens jedesmal nachgezogen, d.h. in die Ausgangsposition zurückgezogen werden, was gleichfalls Zeit kostet, und bei den hohen Taktgeschwindigkeiten mit Problemen verbunden ist. Ein weiterer Punkt hinsichtlich einer schonenden Produktbehandlung sind die bei hohen Taktzahlen entstehenden Fliehkräfte und Geschwindigkeiten, die in der 180° Kurve der bekannten Stauketten auftreten. Hinzu kommt, daß die bekannten Vorrichtung hohe bewegte Massen haben, was gleichfalls ungünstig ist.

Die der Erfindung zugrunde liegenden Aufgabe besteht daher darin, die Vorrichtung der eingangs genannten Art so auszubilden, daß auch bei hohen Taktgeschwindigkeiten einerseits ausreichend lange Stillstandzeiten zur gruppenweisen Entnahme zur Verfügung stehen und andererseits eine schonende Behandlung der Gegenstände gewährleistet ist.

Die erfindungsgemäße Vorrichtung soll einfach und somit wirtschaftlich ausgebildet sein.

Diese Aufgabe wird gemäß der Erfindung durch die Ausbildung gelöst, die im kennzeichnenden Teil des Patentanspruchs 1 angegeben ist.

Bei der erfindungsgemäßen Vorrichtung werden nicht die beiden Trume einer einzigen horizontalen Förderkette zur Aufnahme und Entnahme der Gegenstände verwandt sondern sind zwei Förderketten mit gleicher oder entgegengesetzter Förderrichtung nebeneinander angeordnet, bei denen Aufnahme und Entnahme am selben Kettentrum jeweils erfolgen können. Die Ausbildung ist so gestaltet, daß zu einem gegebenen Zeitpunkt eine der Förderketten läuft und die ankommenden Gegenstände aufnimmt während die andere Förderkette stillsteht, so daß die Gegenstände von ihr gruppenweise entnommen werden können, und über eine umschaltbare Sperreinrichtung dafür gesorgt ist, daß die Förderketten abwechselnd zugänglich sind, d.h. Gegenstände aufnehmen und Gegenstände zur Entnahme gruppenweise zur Verfügung stellen, d.h. stillstehen. Da die beiden Förderketten derart zueinander angeordnet sind, daß ihre Abteile zueinander und zur Zuführrichtung der Gegenstände ausgerichtet sind, können die Gegenstände von den Abteilen der in Zuführrichtung hinter der vorderen Förderkette angeordneten Förderkette aufgenommen werden, nachdem sie durch das entsprechende stillstehende Abteil der vorderen Förderkette hindurch gegangen sind.

Die erfindungsgemäße Ausbildung zeichnet sich dadurch aus, daß sie konstruktiv einfach ist, da zu taktende die Förderketten tragende Schlitten fehlen, hohe Stillstandzeiten möglich sind, da die Förderkette, von der die Gegenstände entnommen werden, während der gesamten Zeit stillsteht, während der die andere Förderkette mit einer entsprechenden Anzahl von Gegenständen beschickt wird, und keine Zeitverluste auftreten, die bei den bekannten Vorrichtungen durch das Nachziehen des Schlittens beziehungsweise der Förderkette verursacht werden.

Besonders bevorzugte Ausbildungen und Weiterbildungen der erfindungsgemäßen Vorrichtung sind Gegenstand der Patentansprüche 2 bis 4.

Im folgenden werden anhand der zugehörigen Zeichnung zwei besonders bevorzugte Ausführungsbeispiele der Erfindung näher beschrieben. Es zeigen
- Fig. 1: eine Draufsicht auf ein erstes Ausführungsbeispiel,
- Fig. 2: eine Seitenansicht des Ausführungsbeispiel und
- Fig. 3: eine Stirnansicht des Ausführungsbeispiels
- Fig. 4: eine Draufsicht auf ein zweites Ausführungsbeispiel.

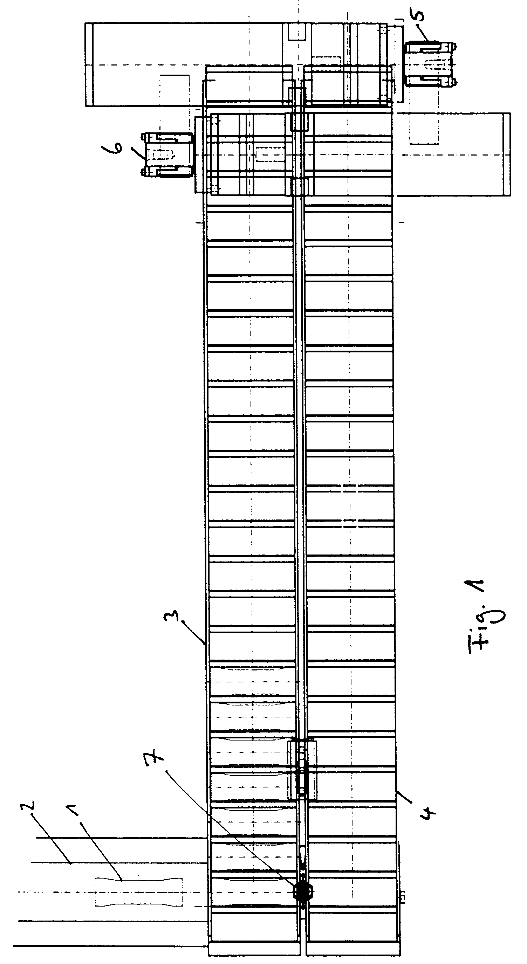

Die in Fig. 1 dargestellte Vorrichtung dient dazu, fortlaufend einzeln längs einer Förderbahn 2 zugeführte Gegenstände 1 aufzunehmen und diese Gegenstände gruppenweise zur Entnahme zu einer Verpackungsmaschine bereit zu stellen.

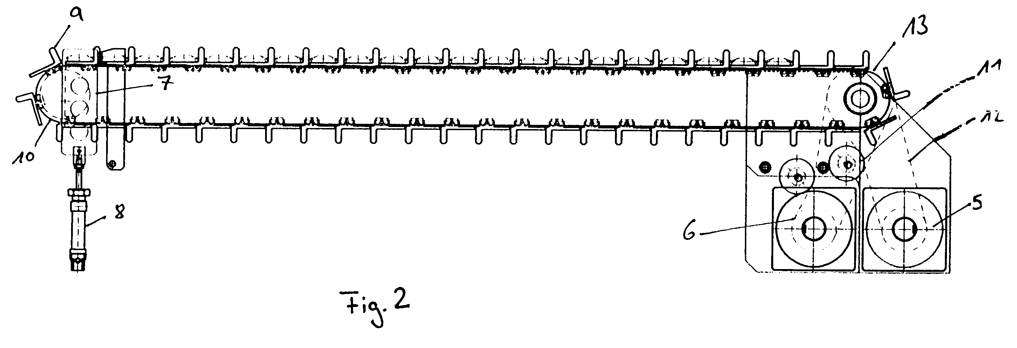

Quer zur Förderbahn 2, die wenigstens kurz vor der Vorrichtung geradlinig verläuft, sind zwei endlose Förderketten 3, 4 parallel zueinander mit gleicher Förderrichtung angeordnet, die Abteile zur Aufnahme der ankommenden Gegenstände 1 aufweisen. Die Trume der Förderketten 3, 4 verlaufen in vertikaler Richtung übereinander, die beiden oberen Trume liegen in einer horizontalen Ebene, die zur Ebene der Förderbahn 2 ausgerichtet ist. Die Abteile sind fachartig ausgebildet und können aus im Querschnitt winkelförmigen Elementen 9 bestehen, wie es in Fig. 2 dargestellt ist, deren aufrecht stehender Schenkel in Förderrichtung der Förderkette vorne angeordnet ist. Eine besonders reibungslose Aufnahme der ankommenden Gegenstände 1 ist dann gewährleistet, wenn die Aufnahme in einem Abteil erfolgt, das direkt hinter einem der Umlenkräder 10 der Förderketten 3, 4 liegt. Wie es in Fig. 2 dargestellt ist, ist bei dieser Ausbildung das Aufnahmefach für den ankommenden Gegenstand weit geöffnet, da der aufrecht stehende Schenkel des winkelförmigen Elementes 9 des folgenden Abteils radial vom Umlenkrad 10 weg steht und somit bezüglich des Aufnahmeabteils schräg nach außen verläuft. Die Anteile können aber auch aus U-förmigen Elementen bestehen.

Der Antrieb der beiden Förderketten 3, 4 erfolgt über separate Antriebsmotoren 5, 6, die über Zwischenräder 11 und Antriebsriemen 12 mit der angetriebenen Welle der Förderketten 3, 4 jeweils verbunden sind, auf der das andere Umlenkrad 13 sitzt.

Die beiden Förderketten 3, 4 sind zueinander so angeordnet, daß ihre Anteile in einer Linie zueinander und zu der Richtung ausgerichtet sind, in der die Gegenstände 1 auf der Förderbahn 2 zugeführt werden. Zwischen den beiden Förderketten 4, und zwar in der Verlängerung der Zuführrichtung der Gegenstände 1 ist eine Sperreinrichtung 7, 8 vorgesehen, die so ausgebildet ist, daß sie das Anteil der in Förderrichtung der Gegenstände 1 hinten liegenden Förderkette 4 öffnen und schließen kann.

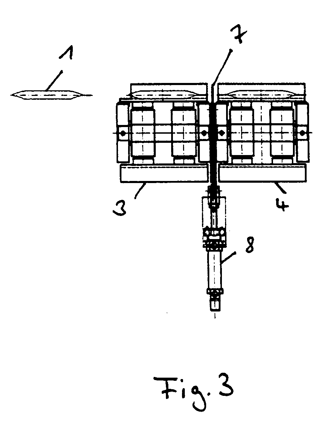

Die Sperreinrichtung 7, 8 kann aus einem Schieber beispielsweise in Form eines Bleches 7 bestehen, wie es in Fig. 2 und 3 dargestellt ist, der über ein Betätigungsglied beispielsweise ein pneumatisches oder motorisches Betätigungsglied 8 betätigt wird. Die Betätigungsrichtung ist senkrecht zu der Zuführrichtung der Gegenstände 1, bei dem dargestellten Ausführungsbeispiel die Vertikalrichtung.

Die Antriebseinrichtungen, d. h. insbesondere die Motoren 5 und 6 für die Förderketten 3 und 4 sowie die Betätigungseinrichtung für die Sperreinrichtung 7, 8 sind mit einer Steuereinrichtung verbunden. Die Steuereinrichtung ist so ausgebildet, daß sie einen der Antriebsmotoren 5 und 6 einer der beiden Förderketten 3 und 4 bei entsprechender Stellung der Sperreinrichtung 7, 8 taktet, während die jeweils andere Förderkette stillsteht.

Die obige Vorrichtung arbeitet in der folgenden Weise:

Zu einem gegebenen Zeitpunkt wird beispielsweise der Motor 6 der Förderkette 3 über die Steuereinrichtung getaktet, so daß die Anteile der Förderkette 3 an der Förderbahn 2 für die aufzunehmenen Gegenstände 1 vorbeilaufen und in jedem Anteil jeweils ein Gegenstand 1 aufgenommen wird. Dabei hat die Sperreinrichtung beispielsweise der Schieber 7 eine Position, in der das dahinterliegende Anteil der Förderkette 4 geschlossen ist. Die Förderkette 4 wird nicht getaktet, sie steht still.

Die einzeln ankommenden Gegenstände 1 werden nacheinander in den Anteilen der Förderkette 3 aufgenommen und weiterbefördert. Nach einer bestimmten Anzahl von Takten wird über die Steuereinrichtung die Taktung des Motors 6 beendet, so daß die Förderkette 3 anhält, wird die Sperreinrichtung 7, 8 so betätigt, daß der Weg zu der in Zuführrichtung der Gegenstände 1 dahinterliegenden Förderkette 4 freigegeben ist, und wird der Motor 6 für diese Förderkette in Betrieb gesetzt. Das hat zur Folge, daß die Förderkette 3 stillsteht, so daß beispielsweise mittels eines Roboters eine gewünschte Anzahl von Gegenständen entnommen, zu einer Verpackungsmaschine übertragen und dort z.B. in einer Schachtel verpackt werden kann, während die weiterhin fortlaufend zugeführten Gegenstände 1 von den Anteilen der nun laufenden Förderkette 4 aufgenommen werden. Dazu gehen die Gegenstände 1 zunächst durch das davor liegende stillstehende Anteil der Förderkette 3 hindurch. Nach einer vorgegebenen Anzahl von Takten wird die Arbeitsweise umgekehrt, d. h. wird die Förderkette 4 stillgesetzt und die Förderkette 3 wieder in Betrieb gesetzt, wobei in einer zeitlich genau abgestimmten Weise die Sperreinrichtung 7, 8 betätigt wird, so daß der Weg zu den Anteilen der hinteren dann nicht mehr laufenden Förderkette 4 versperrt ist.

Der oben beschriebene Anlauf wird zyklisch wiederholt, so daß abwechselnd von beiden Förderketten 3, 4 die fortlaufend ankommenden Gegenstände 1 aufgenommen und gruppenweise entnommen werden können.

Die zeitliche Abstimmung zwischen den einzelnen Schalt- oder Steuervorgängen ist über Sensoren beispielsweise Lichtsensoren und Lichtschranken möglich, die die Ankunft der jeweiligen Gegenstände 1 erfassen und über deren Ausgangssignale die Steuereinrichtung die Antriebsmotoren 5, 6 taktet und die Sperreinrichtung 7, 8 schaltet. Entsprechende Anpassungen an die jeweiligen Gegebenheiten auf der Zufuhrseite der Gegenstände 1 sowie auf der Entnahmeseite können an Ort und Stelle erfolgen.

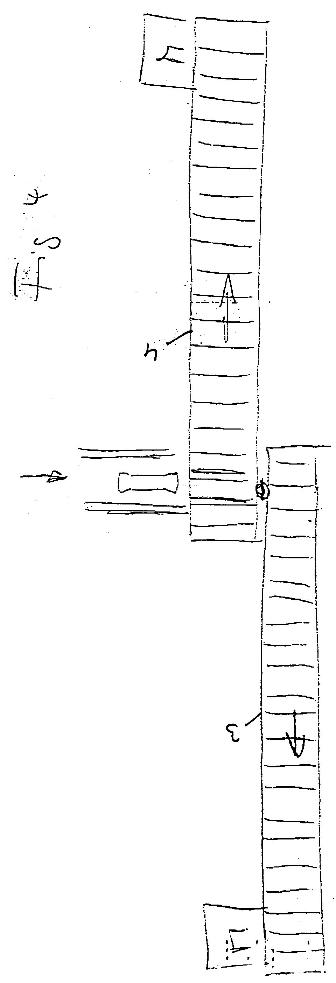

Fig. 4 zeigt ein zweites Ausführungsbeispiel, bei dem im Unterschied zu dem ersten in Fig. 1 dargestellten Ausführungsbeispiel die beiden Förderketten 3, 4 entgegengesetzte Förderrichtungen haben und bezüglich der Aufnahmeposition für die Gegenstände 1 versetzt angeordnet sind. Wichtig ist dabei, daß wenigstens an der Aufnahmeposition die Anteile beider Förderketten 3, 4 in einer Linie zueinander und zur Förderrichtung der Gegenstände 1 ausgerichtet sind.

## Patentansprüche

1. Vorrichtung zum Aufnehmen von fortlaufend einzeln zugeführten Gegenständen (1) und zum gruppenweisen Bereitstellen der Gegenstände zur Entnahme für eine Verpackungsanlage mit einer endlosen quer zur Förderbahn (2) der Gegenstände angeordneten Förderkette (3), die mit Anteilen zur Aufnahme der Gegenstände versehen ist, gekennzeichnet durch eine weitere endlose Förderkette (4) mit Anteilen zum Aufnehmen der Gegenstände (1), die bezüglich der Förderbahn (2) der Gegenstände (1) hinter der einen Förderkette (3) so angeordnet ist, daß wenigstens ihr Anteil an der Aufnahmeposition in Förderrichtung der Gegenstände (1) in einer Linie mit dem entsprechenden Anteil der einen Förderkette (3) ausgerichtet ist, eine Sperreinrichtung (7, 8), die in der Verlängerung der Förderbahn (2) der Gegenstände (1) zwischen den Förderketten (3, 4) angeordnet und so ausgebildet ist, daß sie das in dieser Verlängerung liegende Anteil der weiteren Förderkette (4) öffnen und schließen kann, und eine Steuereinrichtung, die eine der beiden Förderketten (3, 4) antreibt, während sie die andere Förderkette (4, 3) anhält, den Antrieb der angetriebenen Förderkette (3, 4) nach einer vorgegebenen Anzahl von Fördertakten anhält, die Sperreinrichtung (7, 8) betätigt und die jeweils andere Förderkette (4, 3) antreibt und diesen Steuervorgang zyklisch wiederholt.

2. Vorrichtung nach Anspruch 1, dadurch gekennzeichnet, daß die Steuerketten (3, 4) so angeordnet sind, daß ihr erstes Abteil hinter einem der Umlenkräder (10) an der Aufnahmeposition der Gegenstände (1) liegt, und die Anteile von im Querschnitt winkelförmigen Elementen (9) mit aufrechtstehendem Schenkel in Laufrichtung der Förderbänder (3, 4) vorne gebildet sind.

3. Vorrichtung nach Anspruch 1 oder 2, dadurch gekennzeichnet, daß die Sperreinrichtung (7, 8) als Schieber (7) ausgebildet ist, dessen Breite im wesentlichen der Breite der Förderkettenabteile entspricht.

4. Vorrichtung nach Anspruch 3, dadurch gekennzeichnet, daß der Schieber (7) in eine Richtung senkrecht zur Förderbahn (2) der Gegenstände (1) betätigt wird.

5. Vorrichtung nach Anspruch 4, dadurch gekennzeichnet, daß die Betätigungsrichtung des Schiebers (7) die Vertikalrichtung ist.

## Claims

1. Device for receiving objects (1) which are being supplied individually in a continuous manner and for preparing the said objects into groups ready for removal for a packaging apparatus having a continuous conveyor chain (3) disposed transverse to the conveyor track (2) of the objects, which conveyor chain is provided with compartments for receiving the objects, characterised by a further continuous conveyor chain (4) which comprises compartments for receiving the objects (1) and is disposed with respect to the conveyor track (2) of the objects (1) behind the one conveyor chain (3) in such a manner that at least its compartment in the receiving position is aligned in the conveying direction of the objects (1) in a line with the corresponding compartment of the one conveyor chain (3), a blocking device (7,8) which is disposed in the extension of the conveyor track (2) of the objects (1) between the conveyor chains (3,4) and is formed in such a manner that it can open and close the compartment, lying in this extension, of the other conveyor chain (4) and a control device which drives one of the two conveyor chains (3,4), whereas it stops the other conveyor chain (4,3), stops the drive of the driven conveyor chain (3,4) after a predetermined number of delivery cycles, actuates the blocking device (7,8) and drives the respective other delivery chain (4,3) and repeats this control process in a cyclic manner.

2. Device according to claim 1, characterised in that the control chains (3,4) are disposed in such a manner that their first compartment lies behind one of the deflecting wheels (10) at the receiving position of the objects (1) and the compartments are formed at the front in the running direction of the conveyor belts (3,4) by elements (9) which have an angular cross-section and comprise a vertically standing limb.

3. Device according to claim 1 or 2, characterised in that the blocking device (7,8) is formed as a slide (7), the width of which corresponds substantially to the width of the conveyor chain compartments.

4. Device according to claim 3, characterised in that the slide (7) is actuated in a direction perpendicular to the conveyor track (2) of the objects (1).

5. Device according to claim 4, characterised in that the direction in which the slide (7) is actuated is the vertical direction.

## Revendications

1. Dispositif pour recevoir des articles (1) apportés l'un après l'autre en continu et pour es mettre à disposition en groupes en vue de leur enlèvement, pour une installation d'emballage, dispositif comprenant une chaîne transporteuse (3) sans fin, disposée transversalement à la voie de transport (2) des articles et pourvue de compartiments pour recevoir es articles, **caractérisé** par une autre chaîne transporteuse (4) sans fin, pourvue de compartiments pour recevoir es articles (1), qui est disposée, par rapport à la voie de transport (2) des articles (1), derrière la première chaîne transporteuse (3) de telle sorte qu'au moins son compartiment à la position de réception est orienté, dans la direction de transport des articles (1), en ligne avec le compartiment correspondant de la première chaîne transporteuse (3), par un dispositif de blocage (7, 8), qui est dispose dans le prolongement de la voie de transport (2) des articles (1) entre es chaînes transporteuses (3, 4) et est conçu de telle sorte qu'il peut ouvrir et fermer le compartiment de l'autre chaîne transporteuse (4) qui se trouve dans ce prolongement, et par un dispositif de commande, qui entraîne une des deux chaînes transporteuses (3, 4) tandis qu'il arrête l'autre chaîne transporteuse (4, 3), arrête l'entraînement de la chaîne transporteuse entraînée (3, 4) au bout d'un nombre prédéfini de cycles de transport, actionne le dispositif de blocage (7, 8) et entraîne l'autre chaîne transporteuse respective (4, 3), et répète cycliquement ce processus de commande.

2. Dispositif selon la revendication 1, **caractérisé** en ce que les chaînes transporteuses (3, 4) sont disposées de telle sorte que leur premier compartiment se trouve après un des pignons de renvoi (10) à la position de réception des articles (1), et les compartiments sont formés par des éléments (9) ayant une forme de section angulaire, dont la branche verticale est située vers l'avant dans la direction de circulation des chaînes transporteuses (3, 4).

3. Dispositif selon la revendication 1 ou 2, **caractérisé** en ce que le dispositif de blocage (7, 8) est réalisé sous forme de tiroir (7), dont la largeur correspond sensiblement à la largeur des compartiments des chaînes transporteuses.

4. Dispositif selon la revendication 3, **caractérisé** en ce que le tiroir (7) est actionné dans une direction perpendiculaire à la voie de transport (2) des articles (1).

5. Dispositif selon la revendication 4, **caractérisé** en ce que la direction d'actionnement du tiroir (7) est la direction verticale.
